# EUROPEAN PATENT APPLICATION

(11) **EP 1 760 975 A1**
(43) Date of publication of application: **07.03.2007**
(21) Application number: 06253246.0
(22) Date of filing: 22.06.2006
(51) Int. Cl.: H04L 12/58, G06Q 10/00

(54) **A method for transmitting data in a peer to peer manner**

(30) Priority: 01.09.2005 CN 200510098248
(71) Applicant: ACER INCORPORATED, Taipei Hsien 221 (TW)
(72) Inventor: Chen, Tse-Min, Hsichih, Taipei Hsien 221 (TW)
(74) Representative: Alexander, Thomas Bruce

(57) **Abstract**

A method for transmitting data in a peer to peer manner includes the steps of: storing an internet identification information of a master device (302) into a client device (303); establishing a connection between the client device (303) and the master device (302) via the internet identification information; judging the master device (302) has the data; if yes, then the data are transmitted to the client device (303) in the peer to peer manner; if no, then taking the next step; stopping the connection between the master device (302) and the client device (303).

## Description

The invention relates to a method for transmitting data in a peer to peer manner, and more particularly, to a method for data access, via an internet, to a master device from a client device.

In a fast information society, E-mails have become a part of daily lives of modern people. E-mails only spend two or three minutes in getting their destinations, do not need papers, are environmental protection, and can be attached with files, so that there is a trend that e-mails are now replacing the traditional mails. Users always receive e-mails via using computers, but it is a pity that desktop computers are heavy-weighted, and thus, are not easy to carry, and notebook computers even have three or four kilogram weight, so users are not very willing to carry the computers and moreover, always do not have time to receive e-mails. In addition, there are too many junk e-mails, which makes users in trouble.

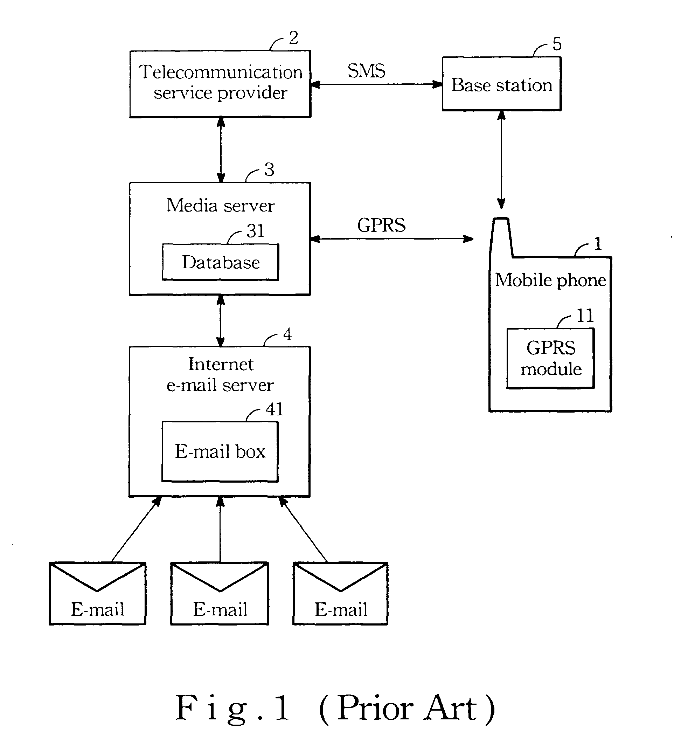

Therefore, please refer to fig.1 which shows a so-called "blackberry' schematic figure in the prior art, which figure comprises: a mobile phone 1, a media server 3, an internet e-mail server 4, a base station 5 and a telecommunication service provider 2, wherein the internet e-mail server 4 is connected to the media server 3, the media server 3 is connected to the telecommunication service provider 2, the telecommunication service provider 2 sends the Short Message Service (SMS) to the mobile phone 1 of the user of the e-mail, and the user of the e-mail uses the General Packet Radio Service (GPRS) or the Wi-Fi to connect to the media server 3 via the internet.

The internet e-mail server 4 has functions of receiving and storing e-mails, that is, the internet e-mail server 4 is used to receive all e-mails that are sent to the user of the e-mail, and is used to store the e-mails into an e-mail box 41 of the user, and the e-mail box 41 waits for the user of the e-mail to receive.

The media server 3 has functions of storing the e-mails of the user and of informing the telecommunication service provider 2, in other words, the media server 3 will receive, from the e-mail box 41 of the Internet e-mail server 4, new e-mails that are sent to the user, and then will store the new e-mails into a database 31. In addition, when there is a new e-mail for the user, the media server 3 will inform the telecommunication service provider 2 of arrival of the new e-mail.

The telecommunication service provider 2 has a function of informing. When the media server 3 informs the telecommunication service provider 2 of arrival of a new e-mail, then the telecommunication service provider 2 will send, via the base station 5, a SMS to the mobile phone 1 of the user of the e-mail to inform the user of the new e-mail.

The user of the e-mail box will contact, via the GPRS, the internet through using a GPRS module 11 of the mobile phone 1, receive the new e-mail from the database 31 of the media server 3, and browse the e-mail via using the mobile phone 1.

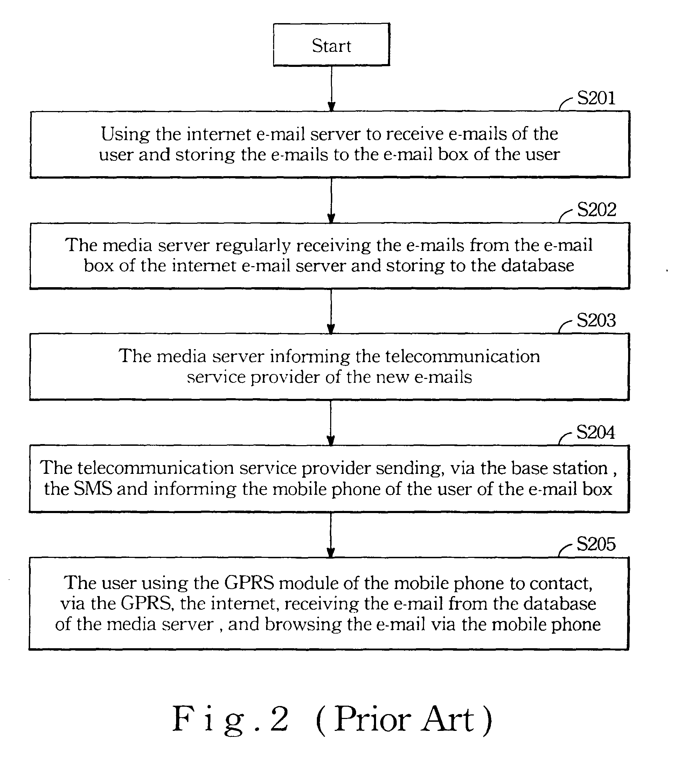

Pease refer to fig.2 which shows a flowchart of such a prior art, and which comprises the steps of: using the internet e-mail server 4 to receive e-mails of the user and storing the e-mails into the e-mail box 41 of the user (S201); the media server 3 regularly receiving the e-mails from the e-mail box 41 of the internet e-mail server 4, and storing into the database 31 (S202); the media server 3 informing the telecommunication service provider 2 of arrival of the new e-mails (S203); the telecommunication service provider 2 sending, via the base station 5, the SMS and informing the mobile phone 1 of the user of the e-mail box 41(S204); and the user using the GPRS module 11 of the mobile phone to contact, via the GPRS, the internet, receiving the e-mail from the database 31 of the media server 33, and browsing the e-mail via the mobile phone 1(S205). If so, the use of e-mail box 41 does not sit in front of a computer to receive e-mails whenever and wherever. But the aforesaid prior art has the following disadvantages:
1. Via a third party, i.e., the media server 3, which may cause confidential information to be leaked.
2. have to pay fees to the telecommunication service provider 2 and the provider who provides the media server 3.
3. have to pay fee for the SMS.
For the above-mentioned, the prior art has rooms for improvement.

In view of aforesaid disadvantages, it is an object of the present invention to provide a method for transmitting data in a peer to peer manner, which method is applied to data transmission between a master device and client device without third party.

The method for transmitting data in the peer to peer manner of the present invention is applied to data transmission between the master device and client device, which method includes the steps of: storing an internet identification information of the master device into the client device; the client device establishing, via the internet identification information, a connection with the master device; judging if there are data in the master device; sending the data to the client device in the peer to peer manner, if there are the data; taking next step, if there are no data; and stopping the connection between the master device and the client device.

In the preferred embodiment of the present invention, the Internet identification information includes a host name, a virtual private network address (VPN), a public network internet protocol address, and a domain name.

In the preferred embodiment of the present invention, the client device establishes, via GPRS or Wi-Fi, a connection with the master device.

In the preferred embodiment of the present invention, the Internet identification information of the master device is transmitted, via a signal transmission cable, Infrared light, or wireless Bluetooth, to the client device, and then is stored into the client device.

The present invention will now be specified with reference to its preferred embodiment illustrated in the drawings, in which:

FIG. 1 is a system schematic drawing of the prior art;

FIG. 2 is a flowchart of the prior art;

FIG. 3A is a first embodiment of system schematic drawing of the present invention;

FIG. 3B is a flowchart of the first embodiment of the present invention;

FIG. 4A is a second embodiment of system schematic drawing of the present invention;

Fig. 4B is a flowchart of the second embodiment of the present invention;

Fig. 5 is a flowchart of filtering data of the present invention; and

Fig. 6 is a flowchart of converting data format of the present invention.

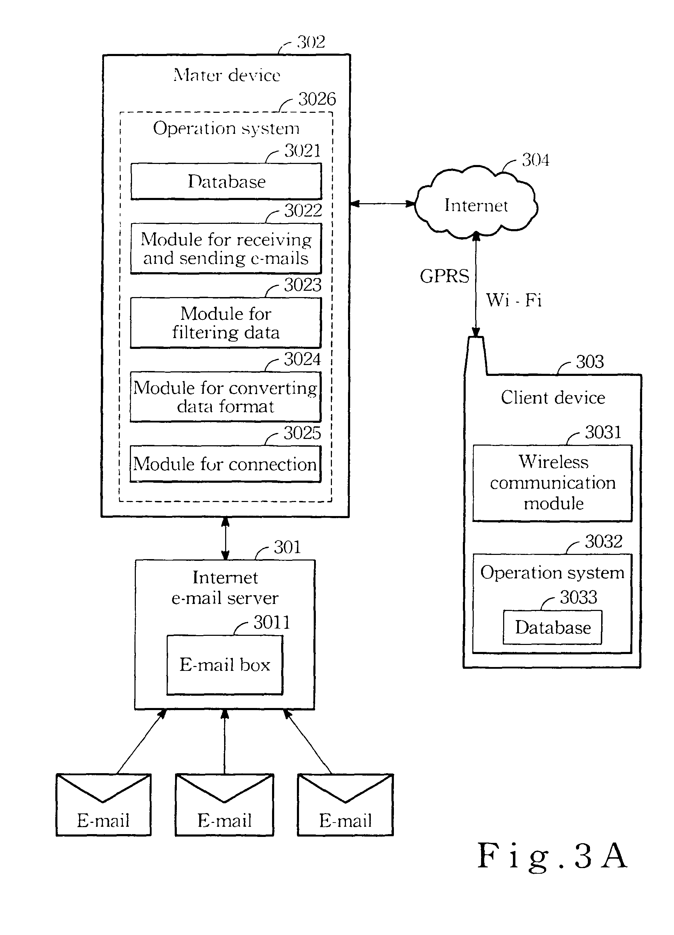

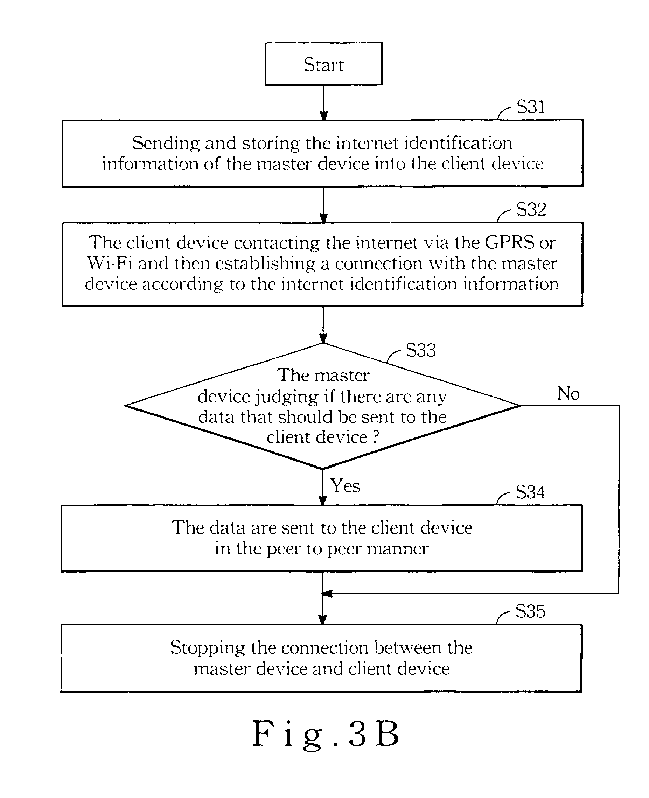

Please refer to Fig.3A and Fig.3B, which respectively show the system schematic drawing and the flowchart of the first embodiment of the present invention, wherein the system schematic drawing of Fig.3A includes: an internet e-mail server 301, a mater device 302, a client device 303, and an internet 304. The aforesaid elements can be connected to one another via the Internet.

The internet e-mail server 301 has functions of receiving and storing e-mails. For user who already has an e-mail box in the internet e-mail server 301, all of e-mails that are going to be sent to the user will be stored in an e-mail box 3011 of the user, and then wait for the user to receive the e-mails.

The master device 302 has an operation system 3026 that has a database 3021, a module for receiving and sending e-mails 3022, a module for filtering data 3023, a module for converting data format 3024 and a module for connection 3025. The master device 302 can be a notebook computer or a desktop computer, which can be connected, via the module for connection 3025, such as an Ethernet card or a Wi-Fi (not shown), to the Internet 304. The module for receiving and sending e-mails 3022 can be, such as Outlook Express of Microsoft. The master device 302 can be connected to the internet e-mail server 301, such as POP3/SMTP server of Microsoft Exchange, IBM Notes, or Google mail, and receives and sends data, such as e-mails, via the module for receiving and sending e-mails 3022. Moreover, in the master device 302, there are the module for filtering data 3023, and the module for converting data format 3024, wherein the module for filtering data 3023 can filter sizes, formats, senders, and subjects of the data according to standards set up by the user, and then stores the filtered data into a database 3021; the module for converting data format 3024 can further convert the data format, such as, converting the data format from HTML format into Text format, or deleting unnecessary figure files, so that the converted data format can be easily transmitted via the GPRS or Wi-Fi, and can be more easily opened and browsed by the operation system 3032 of hand-held communication device. Moreover, the operation system 3026 of the master device 302 can access to data of software of receiving and sending e-mails, access to data of software of electronic notes, access to data of software of instant memos, and at the same time, can access data, such as electronic notes data and instant memos data in the server.

The client device 303 can be any types of hand-held communication device, such as mobile phones or personal digital assistants (PDAs), wherein the client device has a wireless communication module 3031 that can make the client device connect to the client device in a wireless manner, such as the GPRS or Wi-Fi, and then establishes a connection with the master device 302 in a peer to peer manner. The client device 303 uses an internet identification information, such as a host name, a virtual private network (VPN), a public network internet protocol address, and a domain name of the master device 302, to find the master device 302 and then establishes the connection with the master device 302, wherein the internet identification information of the master device 302 can be sent, via a signal transmission cable or wireless manner, such as Bluetooth or infrared, to the client device, and then is stored into the database 3033 of the operation system 3032 of client device 303 in advance,

Please refer to Fig.3B which shows a flowchart of the first embodiment of the present invention, comprising the steps of: sending and storing the internet identification information of the master device 302 into the client device 303 (S31); the client device 303 contacting the internet via the GPRS or Wi-Fi, and then establishing a connection with the master device 302 according to the internet identification information (S32); the master device 302 judging if there are any data that should be sent to the client device 303 (S33); if yes, then the data are sent to the client device 303 in the peer to peer manner (S34); if no, taking the next step; stopping the connection between the master device 302 and client device 303(S35).

The step S32 is very similar to frequency matching of cordless phone for home use, the purpose of which step is to confirm master-client relationship between the master device 302 and the client device 303, so that the client device 303 can find the master device 303 via the internet identification information. Further, the internet identification information of the master device 302 is renewed because of change of location of the master device 302 or because of re-connection of the master device 302. At that time, the client device 303 must carry out the step (S31) to renew the internet identification information of the master device 302.

In step (S33), the master 302 establishes the connection with the internet e-mail server 301 via an internet connection way, regularly receives the e-mails, i.e., data that are sent to the e-mail box of the user, filters the e-mails via the module for filtering data 3023, and converts the data format via the module for converting data format 3024. The purpose of aforesaid is to filter out the important things or emergencies, and is to convert the data into a smaller file to reduce the time for transmission between the master device and the client device. Finally, the filtered data or converted data are stored into the database 3021.

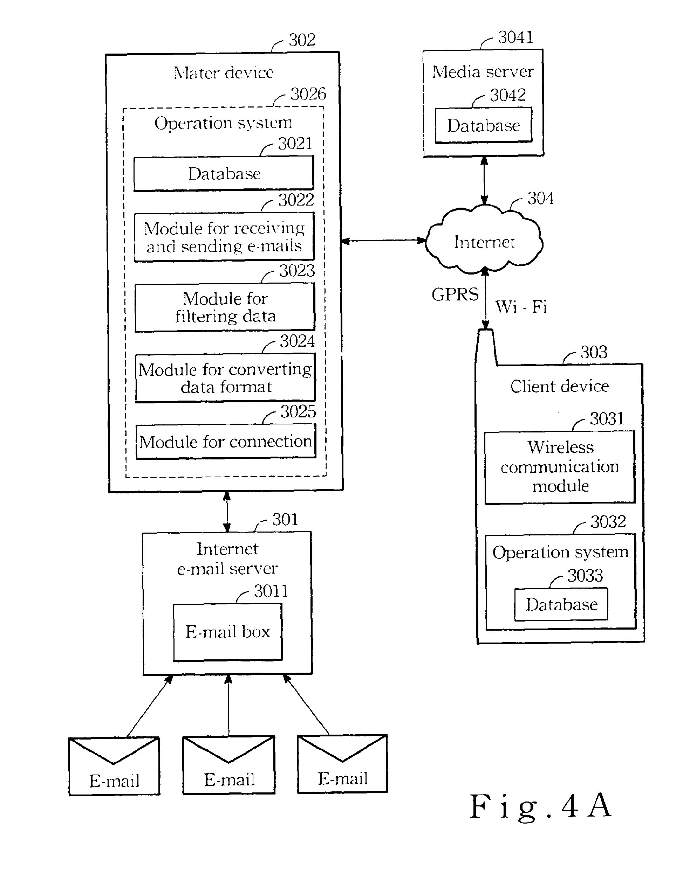

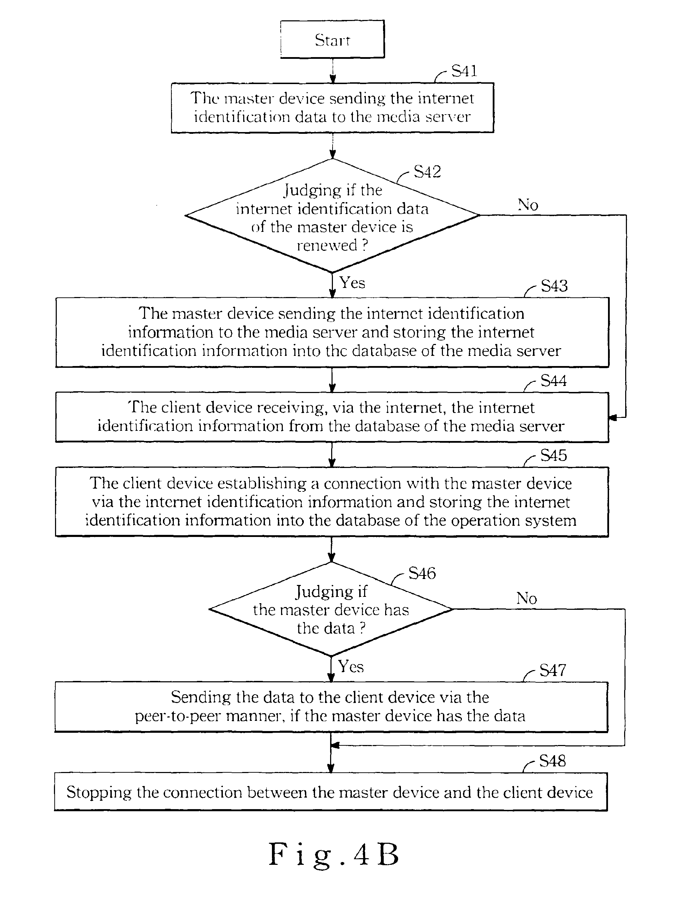

Please refer to Fig.4A and 4B, which show a system schematic drawing and a flowchart of a second embodiment of the present invention. The system schematic of Fig.4A includes: an internet e-mail server 301, a master device 302, a client device 303, a media server 3041, and an internet 304, wherein the aforesaid elements are connected to one another via the internet.

The biggest difference between the first embodiment and the second embodiment is that the second embodiment has the media server 3041, and the media server 3041 can be connected to the master device 302 via the internet 304, and can store an internet identification information of the master device 302 into a database 3042 of the media server 3041. Because the elements of the first embodiment are very similar to the element of the second embodiment, please refer to the first embodiment, and the detailed descriptions are disregarded here.

From the aforesaid description, it can be known that the internet identification information of the master device 302 is renewed because of change of location of the master device 302, or because of re-connection of the master device 302, which causes the client device 303 to be unable to establish a connection with the master device 302. At this time, the client device 303 can establish the connection with the media server 3041 via the internet, then acquire the newest internet identification information, and further establish the connection with the master device 302 in the peer-to peer manner.

Please refer to Fig.4B which shows the flowchart of the second embodiment of the present invention, comprising the steps of: the master device 302 sending the internet identification data to the media server 3041 (S41); judging if the internet identification data of the master device 302 is renewed ? (S42); carrying out the step (S43), if the internet identification data is renewed; carrying out the step (S44), if the internet identification data is not renewed; the master device 302 sending the internet identification information to the media server 3041 and storing the internet identification information into the database 3042 of the media server 3041(S43); the client device 303 receiving, via the internet, the internet identification information from the database 3042 of the media server 3041 (S44); the client device 303 establishing a connection with the master device 302 via the internet identification information and storing the internet identification information into the database 3033 of the operation system (S45); judging if the master device has the data (S46); sending the data to the client device 303 via the peer-to-peer manner, if the master device has the data (S47), and carrying out the step (S48), if the master device does not have the data; stopping the connection between the master device 302 and the client device 303 (S48).

The purpose of the step (S41) is to confirm the master-client relationship between the master device 302 and the client device 303, so that the client device 303 can find out the master device 302 via the internet identification information, and can establish a connection in the peer-to-peer manner. The master device 302 is connected, via Ethernet card or wireless local area network, Wi-Fi (wireless LAN) (not shown), to the internet 304, and sends the internet identification information to the media server 3041.

In the step (S42), the internet identification information of the master device 302 is renewed because of change of location of the master device 302 or because of re-connection of the master device 302.

In the step (S43), the master device is connected to the internet 304 via the module for connection 3025 through the Ethernet card or Wi-Fi. (not shown), then sends the internet identification information to the media server 3041, and stores the internet identification information into the database 3042 of the media server 3041.

In the step (S44), the client device 303 is connected, via the wireless communication module 3031, such as GPRS, or Wi-Fi, to the Internet 304, so as to receive the internet identification information from the database 3042 of the media server 3041.

In the step (S45), the client device 303 is connected, via the wireless communication module 3031, such as GPRS, or Wi-Fi, to the Internet 304, then establishes a connection with the master device 302, and stores the internet identification information into the database 3033 of the operation system.

As shown in the first embodiment, the master device 302 includes the module for filtering data (e-mail) 3023 and the module for converting data format 3024, the functions of which have been descried in the first embodiment. Thus, the detailed descriptions are disregarded here.

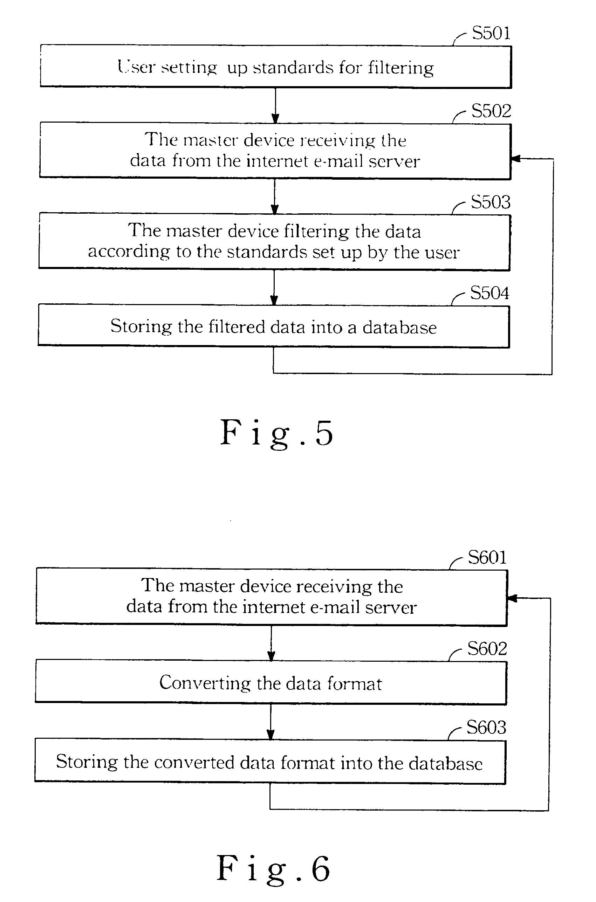

Please refer to Fig.5 which is a flowchart of the module for filtering data 3023 of the master device 302 of the first and second embodiments of the present invention, comprising the steps of: user setting up standards for filtering (S501); the master device 302 receiving the data from the internet e-mail server 301 (S502); the master device 302 filtering the data according to the standards set up by the user (S503); storing the filtered data into a database (S504).

In step (501), the user can set up the standards for the module for filtering data 3023 of the master device 302, or can establish a connection with the master device 302 via the wireless communication module 3031 of the client device 303 to set up the standards for the module for filtering data 3023 of the master device 302.

First, the standards, such as sizes, formats, senders and subjects, for filtering the data are set up by the user, so that the user can filter out the data which the user does not want to receive, and thus can save time.

In step (S502), the master device 302 is connected, via Ethernet card or wireless Wi-Fi, to the internet e-mail server 301, and has the module for receiving and sending e-mails, such as Outlook express, so as to receive the data, i.e., e-mail, from the e-mail box 3011 of user of the internet e-mail server 301.

In step (S503), the module for filtering data 3023 can filter sizes, formats, senders, and subjects of the data according to the standards set up by the user.

In step (S504), the filtered data are stored into the database 3021.

Through aforesaid steps, the user can set up the standard for filtering in advance, and can easily filter out the data (e-mail) which the user do not want to receive.

Please refer to Fig.6 which shows flowchart of converting data format of the master device 302 of the present invention, comprising the steps of: the master device 302 receiving the data from the internet e-mail server 301(S601); converting the data format (S602); storing the converted data format into the database 3021 (S603).

In step (S601), the master device 302 has the module for receiving and sending e-mails 3022, such as Outlook Express. The master device 302 is connected, via Ethernet card or Wi-Fi, to the internet e-mail server 301, and receives the data, such as e-mails, via the module for receiving and sending e-mail 3022.

In step (S602), the module for converting data format 3024 of the master device 302 can convert the data format of the received data, such as converting the HTML format into Text format. Because the client device 303 has the operation system 3032 that is very limited, some specific data formats, such as the HTML, cannot be opened, but once the HTML is converted into Text data format, then the Text data format can be easily opened by the client device 303.

From the aforesaid, compared with the prior art, the present invention has the following advantages:
1. The client device 303 of the present invention can establish, via the internet identification information, the connection with the master device 302 in the peer-to-peer manner. Because of having no third party, there is not at risk of leakage of confidential information.
2. The client device 303 of the present invention establishes the direct connection with the master device 302 via the internet identification information. Because of having no third party, there is no need to pay fees to the telecommunication service provider and the provider who provides the media server, and at the same time, no need to pay fee for the SMS.

While the present invention has been particularly shown and described with reference to a preferred embodiment, it will be understood by those skilled in the art that various changes in form and detail may be without departing from the spirit and scope of the present invention.

## Claims

1. A method for transmitting data in a peer-to-peer manner, which method is applied to data transmission between a master device (302) and a client device (303), the method **characterized by**:
storing an internet identification information of the master device (302) into the client device (303);
the client device (303) establishing via the internet identification information, a connection with the master device (302);
judging if there are data in the master device (302);
sending the data to the client device (303) in the peer to peer manner, if there are the data;
taking next step if there are no the data; and
stopping the connection between the master device (302) and the client device (303).

2. The method according to claim 1, **characterized in that** the internet identification information is a host name of the master device (302).

3. The method according to claim 1, **characterized in that** the internet identification information is a virtual private network address of the master device (302).

4. The method according to claim 1, **characterized in that** the internet identification information is a public network internet protocol address of the master device (302).

5. The method according to claim 1, **characterized in that** the internet identification information is a domain name of the master device (302).

6. The method according to claim 1, **characterized in that** the internet identification information of the master device (302) is transmitted to the client device (303) via a signal transmission cable.

7. The method according to claim 1, **characterized in that** the internet identification information of the master device (302) is stored into the client device (303) via a wireless manner.

8. The method according to claim 1, **characterized in that** the master device (302) filters the data according to standards set up by a user, and stores the filtered data into a database.

9. The method according to claim 1, **characterized in that** before the master device (302) transmits the data to the client device (303), the data format is converted by the master device (302).

10. The method according to claim 1, **characterized in that** the internet identification information of the master device (302) is stored into a media server, and the client device (303) is connected to the media server to acquire the internet identification information of the master device (302), and stores the internet identification information into the client device (303).
